(19) Europäisches Patentamt European Patent Office Office européen des brevets

(11) **EP 2 515 199 A2**

(12) **EUROPEAN PATENT APPLICATION**

(43) Date of publication:
**24.10.2012 Bulletin 2012/43**

(51) Int Cl.:
***G06F 1/20*** *(2006.01)*

(21) Application number: **12159453.5**

(22) Date of filing: **14.03.2012**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **18.04.2011 JP 2011092091**

(71) Applicant: **Sony Corporation
Tokyo 108-0075 (JP)**

(72) Inventors:
• **Takahashi, Tetsuya**
  **Minato-ku Tokyo 108-0075 (JP)**
• **Kose, Hiroaki**
  **Minato-ku Tokyo 108-0075 (JP)**
• **Aruga, Sin**
  **Minato-ku Tokyo 108-0075 (JP)**

(74) Representative: **Keston, Susan Elizabeth
D Young & Co LLP
120 Holborn
London EC1N 2DY (GB)**

(54) **Air blower and electronic apparatus**

(57)     An air blower includes a plurality of fans including a first fan and a second fan. The first fan has a plurality of fins. The second fan has a plurality of fins. The number of the plurality of fins of the second fan is different from that of the plurality of fins of the first fan.

FIG.2

EP 2 515 199 A2

**Description**

The present invention relates to an air blower and an electronic apparatus comprising an air blower.

Japanese Unexamined Patent Application Publication No. 2004-295758 discloses a notebook-sized personal computer (PC) having a main body that is provided therein with two fans serving as a cooling mechanism (see, for example, the paragraph [0042] in this patent document).

In a method of controlling a fan in a PC according to Japanese Unexamined Patent Application Publication No. 2007-124853, a fan controller modifies a pulse width modulation (PWM) signal duty ratio in accordance with a target revolution speed of the fan. The target revolution speed is determined in accordance with a temperature of a heat-generating device that is detected by a temperature sensor (see, for example, the paragraph [0033] in this patent document).

For example, in the above Japanese Unexamined Patent Application Publication No. 2004-295758, two fans are employed as the cooling mechanism. Hence, with this mechanism a greater noise may be generated than in a cooling mechanism provided with only a single fan.

In view of the circumstances as described above, there is a need for an air blower and an electronic apparatus enabling noise reduction.

Various respective aspects and features of the invention are defined in the appended claims. Combinations of features from the dependent claims may be combined with features of the independent claims as appropriate and not merely as explicitly set out in the claims.

According to an embodiment of the present invention, there is provided an air blower including a plurality of fans including a first fan and a second fan.

The first fan has a plurality of fins.

The second fan has a plurality of fins, the number of which is different from that of the plurality of fins of the first fan.

With these fans having different numbers of fins, a resonance level is reduced, whereby a noise level is lowered.

At least one of the number of the plurality of fins of the first fan and the number of the plurality of fins of the second fan may be a prime number. Alternatively, both the number of the plurality of fins of the first fan and the number of the plurality of fins of the second fan may be prime numbers. With these configurations, the occurrence of resonance can be reduced.

The air blower may further include a controller configured to control the plurality of fans to rotate at different revolution speeds. With this configuration, the occurrence of resonance can be reduced.

The controller may cause the first fan to rotate at a first revolution speed and cause the second fan to rotate at a second revolution speed that exhibits a difference from the first revolution speed by a predetermined revolution speed. With the second revolution speed being different from the first revolution speed by a predetermined revolution speed, revolution speed control is executed more easily

For example, the controller may generate a control signal, with the difference being defined as a fixed difference.

The controller may control at least the revolution speed of the first fan on the basis of a temperature of a heat-generating element.

According to another embodiment of the present invention, there is provided an electronic apparatus including one of a heat-generating element and a heat-receiving element, and the above-mentioned air blower configured to deliver air to one of the heat-generating element and the heat-receiving element.

As explained above, according to embodiments of the present invention, a noise reduction can be realized.

Embodiments of the invention will now be described with reference to the accompanying drawings, throughout which like parts are referred to by like references, and in which:

Fig. 1 is a perspective view of a notebook-sized PC provided as an electronic apparatus according to an embodiment of the present invention, shown with its main body in a disassembled state;
Fig. 2 is a plan view of a dual-fan unit according to the embodiment;
Fig. 3 is a block diagram showing a configuration of a control system for an air blower including the dual-fan unit according to the embodiment;
Fig. 4 is a figure for explaining an algorithm utilized to calculate a revolution speed of each fan on the basis of temperature according to the embodiment;
Fig. 5 is a table showing fundamental frequencies at 8,000 rpm ($\approx$133 Hz) and harmonics thereof according to the embodiment;
Fig. 6 is a graph showing a relationship between frequencies and sound pressure levels (dBA) of the dual-fan unit that is obtained by actual measurement, with this graph marked with points of beat frequencies in Fig. 5; and
Figs. 7A to 7C are graphs each showing a relationship between frequencies and sound pressure levels when the revolution speed of a second fan is reduced gradually according to the embodiment.

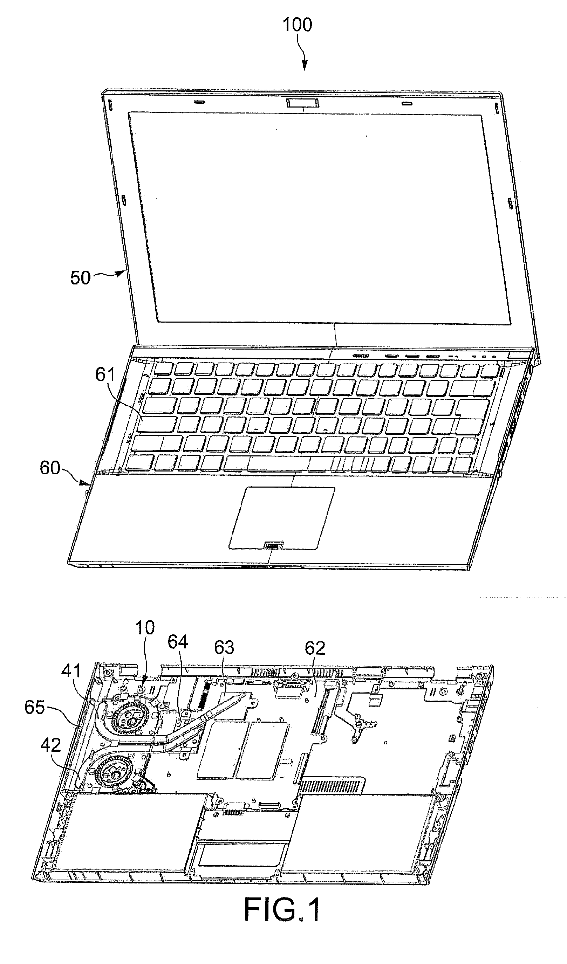

Fig. 1 is a perspective view of a notebook-sized PC provided as an electronic apparatus according to an embodiment of the present invention, shown with its main body in a disassembled state.

A PC 100 has a main body 60, which has a keyboard 61, and a display unit 50 hinged to the main body 60 openably and closably. Substantially at the center of the interior space of the main body 60, a main substrate 62 is provided. On the main substrate 62, chip packaging units 63 and 64 such as processors are mounted.

Inside the main body 60, an air blower (or a cooling apparatus) having a plurality of fans, for example, two fans (a dual-fan unit) 10 is provided. For example, the dual-fan unit 10 may be disposed close to the main substrate 62 and arranged near one edge of the main body 60.

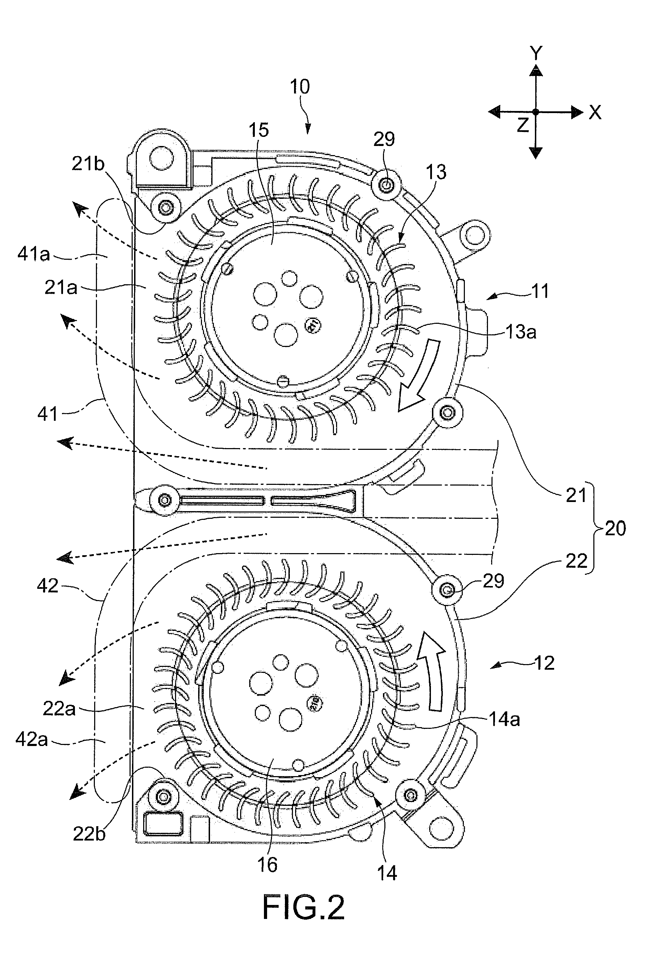

Fig. 2 is a plan view showing the dual-fan unit 10. The dual-fan unit 10 has a first fan 11 and a second fan 12 arranged adjacent thereto. Each of these fans 11 and 12 is basically configured in the form of a centrifugal fan. The fans 11 and 12 have fan cases 21 and 22 respectively, whose shapes are symmetrical about an X-axis. These cases are integrated as a unified unit, which constitutes a case 20. This case 20 is attached to the main body 60 by means of a fixing member such as a screw 29. In Fig. 2, a top cover of the case 20 is removed.

The fan cases 21 and 22 may be provided separately, and fixed as a unified unit by means of, for example, a screw or an adhesive agent.

The first and second fans 11 and 12 have drive motors 15 and 16 respectively. The drive motor 15 of the first fan 11 has a first rotor 13, which is provided with a plurality of fins 13a. Thirty-seven fins 13a is provided to the first rotor 13, for example. The second fan 12 has a second rotor 14, which has a plurality of fins 14a. The number of fins 14a of the second rotor 14 is different from that of fins 13a of the first rotor 13.

Forty-one fins 14a is provided to the second rotor 14, for example.

As thus explained, since the number of fins 13a of the first rotor 13 differs from that of fins 14a of the second rotor 14, a resonance thereof is suppressed, whereby a noise generated by the resonance is controlled. This will be explained later.

The structures of the first fan 11 and the second fan 12 are substantially identical to each other except that the number of fins 13a of the first rotor 13 differs from that of fins 14a of the second rotor 14 and that these fans are arranged (shaped) symmetrically about the X-axis.

In Fig. 1, the first rotor 13 of the first fan 11 is driven by the drive motor 15 to rotate clockwise and the second rotor 14 of the second fan 12 anticlockwise by the drive motor 16.

The two chip packaging units 63 and 64 mounted on the main substrate 62 are, for example, heat-generating devices (heat-generating elements), to which heat pipes 41 and 42 serving as heat-receiving elements are connected respectively. Heat-absorbing parts of the first heat pipe 41 and the second heat part pipe 42 are connected to the heat-generating devices 63 and 64, respectively. Heat-discharging parts of the first and second heat pipes 41 and 42 are connected to the fan cases 21 and 22 of the dual-fan unit 10, respectively.

The heat-generating device 63 may be, for example, a central processing unit (CPU), while the heat-generating device 64 may be a processor other than the CPU and have, for example, a graphics chip or a chip including a universal serial bus (USB) controller.

As shown in Fig. 2, rectilinear sections of the fan cases 21 and 22 are formed as air discharge ports 21a and 22a. Heat-discharging parts 41a and 42a of the heat pipes 41 and 42 are arranged to be adjacent to the air discharge ports 21a and 22a of the fan cases 21 and 22, respectively. As shown in Fig. 1, typically the heat-discharging parts 41a and 42a of the heat pipes 41 and 42 are arranged between the air discharge ports 21a and 22a and an air discharge port 65 of the main body 60.

The fans 11 and 12 suck air from outside in directions on the keyboard 61 side and the main body 60 bottom side respectively and expel the air outside via the air discharge ports 21a and 22a.

The heat pipes 41 and 42 are arranged to pass between the rotors 13 and 14 of the fans 11 and 12 and separate gradually from each other toward ends of the heat-discharging parts 41a and 42a of the heat pipes 41 and 42. The heat-discharging part 41a of the first heat pipe 41 is arranged adjacent to the air discharge port 21a of the fan case 21 such that the heat-discharging part 41a extends toward the back portion (on a side where a portion (a hinge) of connection between the main body 60 and the display unit 50 is provided) of the main body 60. The heat-discharging part 42a of the second heat pipe 42 is arranged adjacent to the air discharge port 22a of the fan case 22 such that the heat-discharging part 42a extends toward the front side of the main body 60.

As explained above, with three components - the dual-fan unit 10, the first heat pipe 41, and the second heat pipe 42 - being arranged by making the most of the limited space available, the size of the cooling system can be reduced.

For a notebook-sized PC of a type with only a limited space available to house its components, it is suitable to arrange the fans 11 and 12 close to each other in the main body 60, because such a configuration allows the lengths of the heat pipes 41 and 42 to be shorter, whereby greater space saving can be realized. For all this improvement, however, a beat (noise) level may become higher because the fans 11 and 12 come close to each other. In order to address such a problem, it is desirable to provide technology described in this disclosure.

[Configuration of control system for air blower]

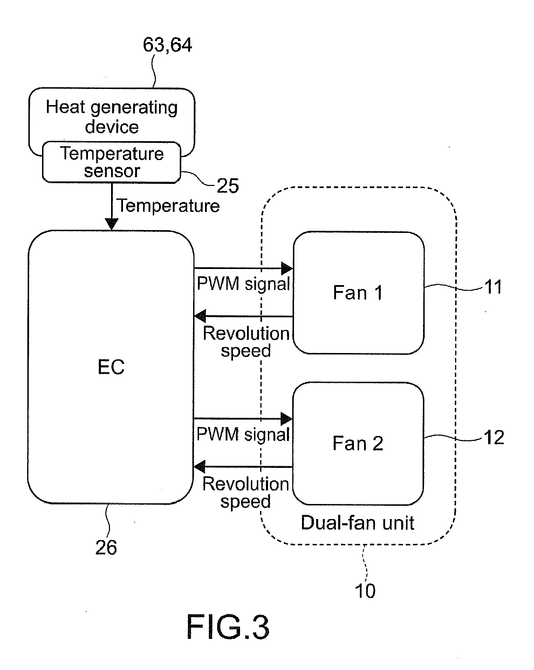

Fig. 3 is a block diagram showing a configuration of a control system for an air blower including the dual-fan unit 10.

This system has a temperature sensor 25 that monitors temperatures of the heat-generating devices 63 and 64, and an embedded controller (EC) 26 that controls the dual-fan unit 10.

The temperature sensor 25 has functions of measuring temperature by means of a diode or thermistor incorporated in the heat-generating devices 63 and 64, and informing the EC 26 of the measured temperature information. The temperature sensor 25 may also measure temperature by means of a diode or thermistor incorporated in itself. A system management bus (SMBus) or the like may be used to implement the informing method, but other methods may be used.

The EC 26 obtains the information on temperature determined by the temperature sensor 25. The EC 26 has a tachometer that measures the number of revolutions (revolution speeds) of the first fan 11 and the second fan 12 of the dual-fan unit 10. On the basis of the acquired temperature information and the measured revolution speeds of the fans 11 and 12, the EC 26 controls the fans 11 and 12 to rotate at dissimilar speeds. In this case, the EC 26 functions as a controller.

Typically, the EC 26 controls the revolution speeds of the fans by modifying a pulse width modulation (PWM) signal duty ratio. For example, the EC 26 obtains the information on temperatures of the heat-generating devices 63 and 64 and determines target revolution speeds for the fans based on the temperatures. After this determination, on the basis of a difference between the target revolution speeds and the actual revolution speeds measured by the tachometer, the EC 26 works out a PWM signal duty ratio to be set, and thereafter outputs the ratio to the dual-fan unit 10.

Each of the first fan 11 and the second fan 12 has a function of obtaining a PWM signal from the EC 26 and a function of outputting a signal of its own revolution speed.

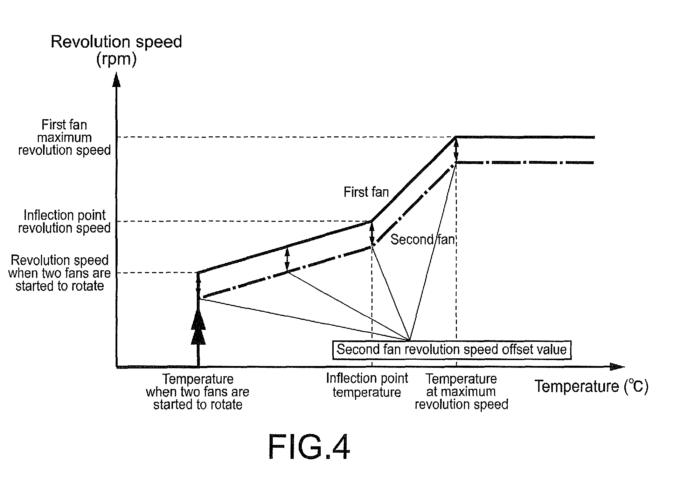

Fig. 4 is a figure for explaining an algorithm to calculate revolution speeds on the basis of temperature. On the basis of the algorithm, the EC 26 is able to determine the revolution speeds of the first fan 11 and the second fan 12 uniquely on the basis of the acquired temperature information. The graph in Fig. 4 shows an example in which there is a predetermined fixed difference in the revolution speeds between the first fan 11 and the second fan 12, and the revolution speed of the second fan 12 is offset by the fixed revolution speed (to be decreased by the fixed revolution speed) from the revolution speed of the first fan 11.

The EC 26 may carry out an operation to determine target revolution speeds for the fan 11 and the fan 12, or may possess the information that is shown in Fig. 4 in advance in the form of a lookup table. In the former case, the EC 26 may calculate a revolution speed of one of the fan 11 and the fan 12, the result of which allows a revolution speed of the other one of the fan 11 and the fan 12 to be calculated by means of a predetermined offset value.

[Method of setting offset value of dual-fan unit revolution speed]

In designing the dual-fan unit 10, a revolution speed offset value is one of the most important elements.

First, respective fundamental frequencies of the first fan 11 and the second fan 12 are determined. The fundamental frequencies correspond to rotor revolution speeds per second, as represented by the following expression.

```
[Fundamental frequency] = [revolution speed ((rpm)/60)]

(unit: Hz) … Expression 1
```

Harmonics that are multiples of the fundamental frequencies are also determined.

There are two types of "beat" - a noise produced by resonance. The beat frequencies (fb) can be represented by the following expressions.

(1) A beat generated in a case where frequencies of sounds produced by two fans are very close to each other and sound waves thereof are synthesized

```
fb = |f2-f1| … Expression 2
```

(2) A beat generated in a case where frequencies of sounds produced by two fans are different from each other and the ratio therebetween is close to an integral multiplication

$$fb = f2-nf1 \; \ldots \; \text{Expression 3}$$

In an example of Expression 3 in the case of above (2), when f1=1,000 Hz, f2=2,100 Hz, and n=2, then fb=100 Hz is obtained. More specifically, a beat frequency of 100 Hz is produced in this case.

According to the present technique, in order to suppress the beat in the above (1), the rotors 13 and 14 of different numbers or prime numbers (37, 41) of the fins 13a and 14a are designed as shown above.

When the number of fins 13a of the rotor 13 is the same as that of fins 14a of the rotor 14, theoretically the fundamental frequencies thereof are identical to each other. In the actual operation, due to variations in revolution speed tolerance between the fans, the revolution speeds of the fans are different somewhat from each other. As a result, a slight difference is generated between the two frequencies. This causes a noise, i.e., a beat.

Alternatively, a beat may be generated in accordance with the following mechanism. When the rotors 13 and 14 rotate, every time the fins 13a and 14a of the rotors 13 and 14 come close to tongue portions 21b and 22b respectively, which are portions projected in predetermined sections in the respective fan cases 21 and 22 (see Fig. 2), a wind noise is caused. When wind noises are created by the revolution of the fans 11 and 12 at timings identical to each other, the wind noises create a sympathetic sound (resonance). This phenomenon may generate a beat.

However, when the number of fins 13a of the rotor 13 is different from that of fins 14a of the rotor 14, a coincidence of fundamental frequencies (to be explained later) between the fans 11 and 12 can be prevented. This reduces the occurrence of resonance, whereby the occurrence of a beat can be suppressed.

In particular, with the numbers of fins 13a and 14a being prime numbers, the occurrence of interference between sound waves to be generated at maximum amplitudes can be minimized. This greatly reduces the occurrence of resonance.

Next, according to the present technique, in order to suppress the beat in the above (2), the EC 26 provides an offset value for revolution speeds of the fans 11 and 12 as explained above. An offset value can be derived from prediction of a beat frequency (fb). For this, fundamental frequency harmonics are derived by taking into account the number of fins 13a and 14a of the rotors 13 and 14.

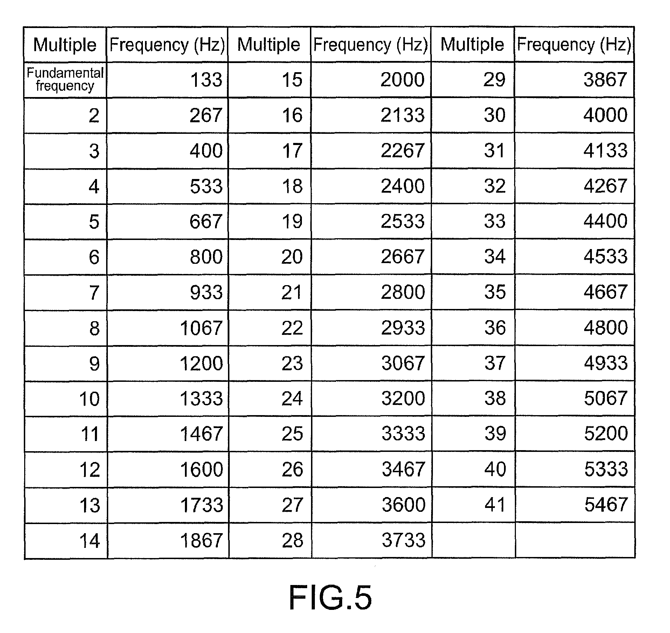

Here, Fig. 5 is a table showing fundamental frequencies at 8,000 rpm (≈133 Hz) and harmonics thereof. This table may be regarded as a table showing beat frequency candidates in a case where two fans having rotors of the same number of fins are rotated at the same revolution speed (8,000 rpm).

In the case of (2) above, when the ratio therebetween is close to an integral multiplication, a beat is generated. This is more likely to be confirmed in a low frequency region, in particular, and beat components tend to be attenuated rapidly when the n becomes greater.

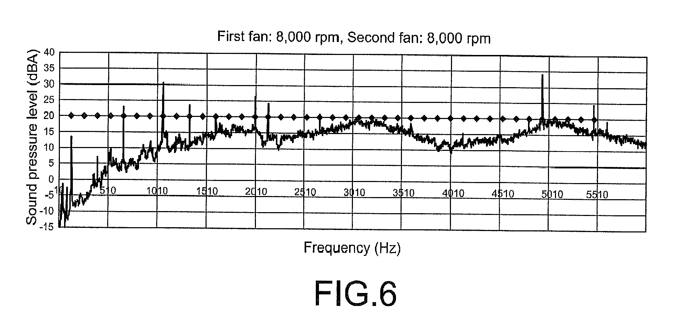

On the basis of the theoretical prediction as thus explained, actual measurement was used to identify a relationship between the frequencies and sound pressure levels (dBA) of the dual-fan unit 10. The Fig. 6 is a graph showing the measurement results. Fig. 6 is marked with beat frequency points shown in Fig. 5. Fig. 6 shows that theoretical prediction marks of 5 times, 8 times, 10 times ... of fundamental frequencies almost coincide with sound pressure levels obtained by the measurement. Human beings may perceive the sounds at these points of coincidence as a beat.

Based on this analysis, in use of an air blower having the dual-fan unit 10 according to the present embodiment, the revolution speed of the first fan 11 was fixed and the rotation speed of the second fan 12 was gradually reduced stepwise. In this experiment, a revolution speed region where the beat is suppressed was worked out by adjusting the revolution speed of the second fan 12 such that the sound pressure levels at points, where the beat frequencies of 5 times, 8 times, 10 times ... of fundamental frequencies coincide with the marks, are lowered.

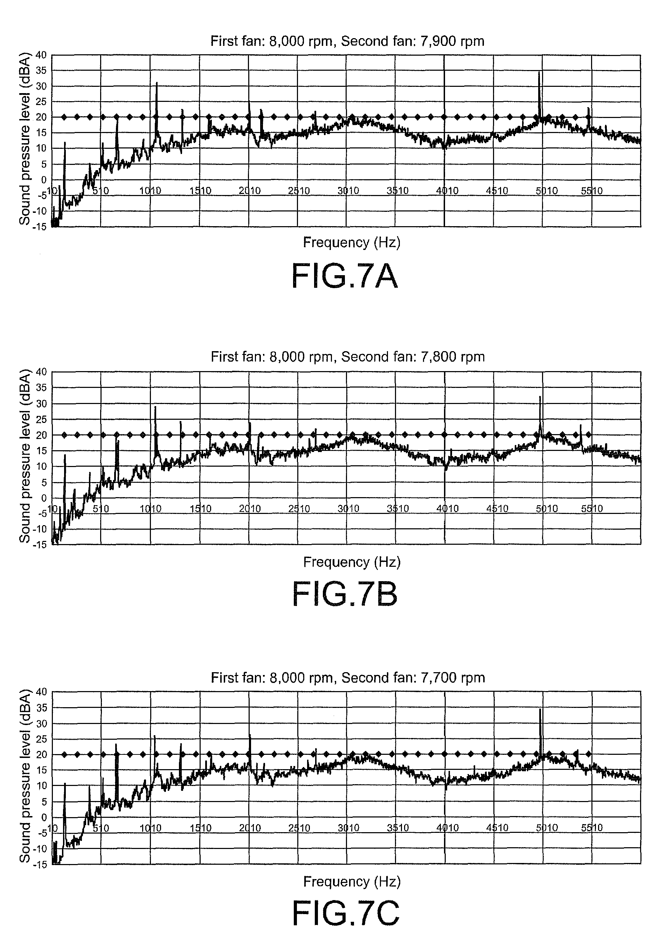

The revolution speed region at which the beat is suppressed is worked out by gradually reducing the revolution speed of the second fan 12 from 7,900 rpm to 7,800 rpm, 7,700 rpm ... when the revolution speed of the first fan 11 is 8,800 rpm, for example. Fig. 7A, Fig. 7B, and Fig. 7C are graphs showing measurement results when the revolution speed of the second fan 12 was 7,900 rpm, 7,800 rpm, and 7,700 rpm, respectively.

According to Fig. 7A to Fig. 7C, the peak at a point (≈1,067 Hz) at eight times the fundamental frequency (≈133 Hz) is estimated to generate a beat audible to human beings. The sound pressure levels approximately above 20 dBA or 30 dBA constitute beats audible to human beings. The measurement also identified high peak values in a comparatively high frequency region, but when the sound rises into higher frequency regions, human beings do not perceive it as a loud noise.

The measurement results in Fig. 7A to Fig. 7C show that the peaks of sound pressure levels coincident with marks in the graphs are lowered by, for example, setting the revolution speed of the second fan 12 to 7,700 rpm (offset value: 300 rpm).

According to the present embodiment, of course, offset values at revolution speeds other than 300 rpm may be worked out by looking for points, at which the peaks of sound pressure levels coincident with marks in the graphs are lowered, by setting the revolution speed of the second fan 12 to 7,700 rpm or lower. It may be reminded that as the revolution speed of the second fan 12 becomes lower, its cooling capacity is reduced gradually due to the reduction in an air flow rate. This conflict causes a trade-off relationship.

As thus explained, in the present embodiment, since the EC 26 drives the first fan 11 and the second fan 12 at different revolution speeds, the occurrence of resonance can be reduced.

Also, in the present embodiment, since the revolution speed of the second fan 12 is different from that of the first fan 11 by a predetermined revolution speed as shown in Fig. 4, revolution speed control is executed more easily.

The dual-fan unit 10 according to the present embodiment allows the fans thereof to be thinner without reducing a cooling capacity in comparison with fans in related art. More specifically, when the reduction in thickness is intended for fans in related art, the cooling capacity thereof has to be compromised because the reduction in thickness induces a reduced air flow rate. However, when a plurality of fans are provided in accordance with embodiments, the cooling capacity can be maintained. Moreover, when the plurality of fans are provided, the generation of a noise (beat) resulting from resonance can be suppressed as explained above.

Also, with the reduction in thickness of fans being realized, even in the case where high performance is provided and thus a large amount of heat is generated, greater freedom in structural designing of the main body 60 of an electronic apparatus such as the PC 100 can be achieved. This enables development of a light and slim product attractive to consumers. Moreover, with individual fans of the dual-fan unit 10 being downsized, greater freedom in designing the arrangement of components can be realized.

[Other Embodiments]

Embodiments are not limited to the embodiment explained above, and other various embodiments may be implemented.

In the above embodiment, the rotors 13 and 14 of different numbers of fins 13a and 14a - in particular, of prime numbers (37, 41) - are provided. However, the number of fins of one of the rotors may be prime or the number of fins of both rotors may not be prime although these rotors differ in the number of fins. When the numbers of fins of both rotors are prime numbers, beat suppression is most effectively exhibited. When the number of fins of one of the rotors is prime while the number of fins of the other one of the rotors is not prime, beat suppression is secondary effective. This being said, mere change in the number of fins is able to induce beat suppression. The prime number combination is not limited to a combination of 37 and 41, but other combinations may be employed.

In the above embodiment, as shown in Fig. 4, the target revolution speed to be set to the second fan 12 is calculated on the basis of the target revolution speed to be set to the first fan 11. However, in a case where a heat-generating device generates a large amount of heat and the first fan 11 is intended to be rotated at the maximum revolution speed regardless of a target revolution speed, the EC 26 may calculate a target rotation speed for the second fan 12 on the basis of the actual revolution speed (its maximum revolutions speed) of the first fan 11.

In the graph of Fig. 4, inflection points are provided, but they may not be provided. The graph may include a quadratic curve or a form similar thereto.

In the above embodiment, the EC 26 has a function of measuring respective revolution speeds of the fans 11 and 12 by mean of, for example, a tachometer. However, even if the fans 11 and 12 are not provided with a tachometer, a cooling function similar to that in the above embodiment can be obtained by measuring in advance a relationship between revolution speeds and a PWM signal duty ratio and storing information on a duty ratio difference, which is necessary to suppress resonance, by the EC 26. Taking into account the variation of performance of the fans 11 and 12 over time, the EC 26 preferably has a revolution speed measuring function such as a tachometer and controls a revolution speed while monitoring the actual revolution speed.

In the above embodiment, the method of revolution speed control by the EC 26 is based on PWM, but the method is not limited thereto and may be based on pulse frequency modulation (PFM) or pulse amplitude modulation (PAM).

Alternatively, the control method may be executed not by directly inputting a PWM signal into the dual-fan unit 10, but by varying a revolution speed in accordance with voltage levels by means of a circuit that smoothes the PWM signal. In such a case, by using a circuit that is able to set a voltage level of the second fan 12 to be lower by a fixed voltage level than that of the first fan 11, the controller is able to control revolution speeds of these fans by outputting only one PWM signal, with a fixed revolution speed difference between the fans 11 and 12 being established.

In the embodiment shown in Fig. 4, a target revolution speed difference between the fans 11 and 12 is fixed, but this may be controlled to vary in accordance with a temperature detected, or a preset algorithm, for example.

The above embodiment employs a configuration where the fans 11 and 12 are rotated at dissimilar revolution speeds, but these revolution speeds may be the same.

For example, three fans of different numbers of fins may be provided. In this case, the number of fins of at least one fan from among the three fans may be prime. A mode like this is applicable to the following embodiments as well.

For example, three or more fans, at least two of which have different numbers of fins, may be provided.

For example, four fans may be provided, with at least first and second fans from among these four fans being rotated at the same revolution speed and having different numbers of fins. In this case, (1) third and fourth fins may have the same number of fins and rotate at the same revolution speed, (2) the third and fourth fins may have different numbers of fins but rotate at the same revolution speed, and (3) the third and fourth fins may be have different numbers of fins and rotate at different revolution speeds.

Moreover, at least two fans of a plurality of fans may be different in size, e.g., a rotor diameter or fin area.

The arrangement of the dual-fan unit is not limited to the above embodiment, either. For example, parallel arrangement of two fans of the dual-fan unit may be in a direction along the X-axial direction or may be in other directions in Fig. 1 and Fig. 2.

The two fans of the dual-fan unit according to the above embodiment have shapes symmetrical to each other about the X-axis, but these fans may have different shapes.

In the above embodiment, the EC 26 controls revolution speeds, but a different type of control device such as a CPU may be used to control the revolution speeds.

In the above embodiment, out of two target revolution speeds, a fan to be driven at a higher revolution speed is referred to as the first fan 11 and the fan to be driven at a lower revolution speed is referred as the second fan 12. However, these may be referred to the other way around.

Moreover, the chip packaging unit such as an integrated circuit (IC) is described as an example of the heat-generating device, but the heat-generating device may be an illuminant or the like. The air blower may deliver air to the heat-generating device directly.

The heat pipe is described as an example of the heat-receiving element - a cooling object - that receives air delivered from the air blower directly, but a heat sink may also be utilized.

In the above embodiment, the two heat-generating devices 63 and 64 are provided, but one or three or more heat-generating devices may be provided.

In the above embodiment, a notebook-sized personal PC is described as an example of an electronic apparatus, but the PC may be a desk-top PC or other types of PC. Moreover, the electronic apparatus may be a cellular phone, a tablet device, or the like.

Of the characteristic features of the embodiments explained above, at least two such features may be combined with each other.

Embodiments of the present invention may employ the following configurations.

(1) An air blower including
a plurality of fans including
a first fan having a plurality of fins, and
a second fan having a plurality of fins, the number of which is different from that of the plurality of fins of the first fan.
(2) The air blower according to (1) above, in which at least one of the number of the plurality of fins of the first fan and the number of the plurality of fins of the second fan is a prime number.
(3) The air blower according to (2) above, in which both the number of the plurality of fins of the first fan and the number of the plurality of fins of the second fan are prime numbers.
(4) The air blower according to any one of (1) to (3) above, further including a controller configured to control the plurality of fans to rotate at different revolution speeds.
(5) The air blower according to (4) above, in which the controller causes the first fan to rotate at a first revolution speed and causes the second fan to rotate at a second revolution speed that exhibits a difference from the first revolution speed by a predetermined revolution speed.
(6) The air blower according to (5) above, in which the controller generates a control signal, with the difference being defined as a fixed difference.
(7) The air blower according to any one of (4) to (6) above, in which the controller controls at least the revolution speed of the first fan on the basis of a temperature of a heat-generating element.
(8) An electronic apparatus including:

one of a heat-generating element and a heat-receiving element; and
an air blower including a plurality of fans including
a first fan having a plurality of fins, and
a second fan having a plurality of fins, the number of which is different from that of the plurality of fins of the first fan, the air blower being configured to deliver air to one of the heat-generating element and the heat-receiving element.

It should be understood by those skilled in the art that various modifications, combinations, subcombinations and alterations may occur depending on design requirements and other factors insofar as they are within the scope of the appended claims or the equivalents thereof.

**Claims**

1. An air blower comprising
   a plurality of fans including
   a first fan having a plurality of fins, and
   a second fan having a plurality of fins, the number of which is different from that of the plurality of fins of the first fan.

2. The air blower according to claim 1, wherein
   at least one of the number of the plurality of fins of the first fan and the number of the plurality of fins of the second fan is a prime number.

3. The air blower according to claim 2, wherein
   both the number of the plurality of fins of the first fan and the number of the plurality of fins of the second fan are prime numbers.

4. The air blower according to claim 1, further comprising a controller configured to control the plurality of fans to rotate at different revolution speeds.

5. The air blower according to claim 4, wherein
   the controller causes the first fan to rotate at a first revolution speed and causes the second fan to rotate at a second revolution speed that exhibits a difference from the first revolution speed by a predetermined revolution speed.

6. The air blower according to claim 5, wherein
   the controller generates a control signal, with the difference being defined as a fixed difference.

7. The air blower according to claim 4, wherein
   the controller controls at least the revolution speed of the first fan on the basis of a temperature of a heat-generating element.

8. An electronic apparatus comprising:

   one of a heat-generating element and a heat-receiving element; and
   an air blower including a plurality of fans including
   a first fan having a plurality of fins, and
   a second fan having a plurality of fins, the number of which is different from that of the plurality of fins of the first fan, the air blower being configured to deliver air to one of the heat-generating element and the heat-receiving element.

FIG.1

FIG.2

63,64

Heat generating
device

Temperature
sensor

25

Temperature

EC

PWM signal

Fan 1

11

Revolution
speed

PWM signal

Fan 2

12

Revolution
speed

Dual-fan unit

26

10

# FIG.3

FIG.4

| Multiple | Frequency (Hz) | Multiple | Frequency (Hz) | Multiple | Frequency (Hz) |
|---|---|---|---|---|---|
| Fundamental frequency | 133 | 15 | 2000 | 29 | 3867 |
| 2 | 267 | 16 | 2133 | 30 | 4000 |
| 3 | 400 | 17 | 2267 | 31 | 4133 |
| 4 | 533 | 18 | 2400 | 32 | 4267 |
| 5 | 667 | 19 | 2533 | 33 | 4400 |
| 6 | 800 | 20 | 2667 | 34 | 4533 |
| 7 | 933 | 21 | 2800 | 35 | 4667 |
| 8 | 1067 | 22 | 2933 | 36 | 4800 |
| 9 | 1200 | 23 | 3067 | 37 | 4933 |
| 10 | 1333 | 24 | 3200 | 38 | 5067 |
| 11 | 1467 | 25 | 3333 | 39 | 5200 |
| 12 | 1600 | 26 | 3467 | 40 | 5333 |
| 13 | 1733 | 27 | 3600 | 41 | 5467 |
| 14 | 1867 | 28 | 3733 | | |

## FIG.5

First fan: 8,000 rpm, Second fan: 8,000 rpm

FIG.6

First fan: 8,000 rpm, Second fan: 7,900 rpm

FIG.7A

First fan: 8,000 rpm, Second fan: 7,800 rpm

FIG.7B

First fan: 8,000 rpm, Second fan: 7,700 rpm

FIG.7C

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2004295758 A

- JP 2007124853 A